# EUROPÄISCHE PATENTANMELDUNG

(11) **EP 1 526 624 A2**
(43) Veröffentlichungstag der Anmeldung: **27.04.2005**
(21) Anmeldenummer: 04024645.6
(22) Anmeldetag: 15.10.2004
(51) Int. Cl.: H02H 9/02, H02H 3/02

(54) **Vorrichtung zur Schnellabschaltung von Kurzschlüssen in elektrischen DC- und AC-Netzen**

(30) Priorität: 22.10.2003 DE 10349549
(71) Anmelder: SIEMENS AKTIENGESELLSCHAFT, 80333 München (DE)
(72) Erfinder: Ahlf, Gerd, 91369 Wiesenthau (DE); Krämer, Hans-Peter, Dr., 91058 Erlangen (DE); Wacker, Bernd, 91074 Herzogenaurach (DE)

(57) **Zusammenfassung**

Eine Vorrichtung (1) zur Schnellabschaltung von Kurzschlüssen in elektrischen DC-und AC-Netzen weist einen von dem Kurzschlussstrom durchflossenen Hochtemperatur-Supraleiter (HTS)-Strombegrenzer (7), ein elektrisch in Reihe dazu angeordnetes Schaltgerät (4), eine Sensorik (5) zur Erfassung des Betriebszustandes des HTS-Strombegrenzers (7) und eine an die Sensorik (5) angeschlossene Auswerteeinrichtung (6) zur Erzeugung eines Auslösesignales für einen Auslöser (18) des Schaltgerätes auf.

Eine schnelle und zuverlässige Abschaltung des Schaltgerätes (4) und ggf. eine zeitgleiche Abschaltung weiterer Schaltgeräte (34) im Fall eines Kurzschlusses ist erfindungsgemäß dadurch möglich, dass die Auswerteeinrichtung (6) einen Impulsauslöser (14) aufweist.

## Beschreibung

Die Erfindung betrifft eine Vorrichtung zur Schnellabschaltung von Kurzschlüssen in elektrischen DC- und AC-Netzen gemäß Oberbegriff des Patentanspruchs 1; eine derartige Vorrichtung ist z.B. durch die WO 02/15361 A1 bekannt.

In elektrischen DC- oder AC-Netzen müssen Kurzschlüsse so schnell wie möglich abgeschaltet werden, um dynamische und thermische Belastungen von Netzkomponenten sowie Betriebsstörungen in weiten Teilen des Netzes zu verhindern. Dies gilt insbesondere für als Bordnetze und elektrische Fahranlagen ausgebildete DC- und AC-Netze von Über- und Unterwasserschiffen und Offshore-Anlagen. Diese Netze sind dem Charakter nach Inselnetze und unterliegen in ihrem Betrieb besonderen Anforderungen.

DC-Netze bzw. Gleichstromanlagen sind beispielsweise in Unterwasserschiffen weit verbreitet. Bei den bisher gelieferten Gleichstromanlagen und geplanten neuen Gleichstromanlagen für Unterwasserschiffe sind prospektive Summenkurzschlussströme von ca. 100 bis max. 320 kA möglich, was im Kurzschlussfall zu einer hohen thermischen und infolge hoher mechanischer Kräfte durch Stoßströme zu einer erheblichen dynamischen Belastung der gesamten Gleichstromanlage führt.

AC-Netze bzw. Drehstromanlagen sind als elektrische Fahranlagen in Überwasserschiffen weit verbreitet. In derartigen Überwasserschiffen treten insbesondere bei großen Bordnetzleistungen hohe Kurzschlussleistungen auf.

Die durch die WO 02/15361 A1 offenbarte Vorrichtung zur Abschaltung von Kurzschlüssen in solchen Netzen weist einen von dem Kurzschlussstrom durchflossenen Hochtemperatur-Supraleiter(HTS)-Strombegrenzer und ein elektrisch in Reihe dazu angeordnetes Schaltgerät, z.B. in Form eines Leistungsschalters, auf. Durch den HTS-Strombegrenzer wird der Kurzschlussstrom bereits beim ersten Anstieg begrenzt. So kann eine Begrenzung des Einschaltstromstosses auf ein geringes Vielfaches des Nennstromes innerhalb einer ms erfolgen. Mittels einer Sensorik wird der Betriebszustand des Supraleiters erfasst und mittels einer an die Sensorik angeschlossenene Auswerteeinrichtung eine Auslösung des Schaltgerätes bei einer Änderung des Betriebszustandes des HTS-Strombegrenzers, insbesondere einem Ansprechen des HTS-Strombegrenzers im Fall eines Kurzschlusses, ermöglicht.

Neben der Anforderung nach einem schnellstmöglichen Abschalten eines Kurzschlusses, im Fall von DC- und AC-Netzen von Über- und Unterwasserschiffen und Offshore-Anlagen z.B. innerhalb von 50ms, besteht in elektrischen Netzen oftmals die Anforderung, möglichst zeitgleich auch weitere Schaltgeräte so schnell wie möglich abzuschalten, die ebenfalls in dem von dem Kurzschluss betroffenen Stromkreis und/oder in Netzeinspeisungen oder -abzweigen angeordnet sind.

Es ist deshalb Aufgabe vorliegender Erfindung, die eingangs erwähnte Vorrichtung zur Schnellabschaltung von Kurzschlüssen in elektrischen DC-und AC-Netzen derart weiterzubilden, dass eine Auslösung des von dem Kurzschlusstrom durchflossenen Schaltgerätes und ggfs. weiterer Schaltgeräte innerhalb sehr kurzer Zeit zuverlässig sichergestellt werden kann.

Die Lösung dieser Aufgabe ist erfindungsgemäß durch eine Vorrichtung gemäß Patentanspruch 1 möglich. Vorteilhafte Ausgestaltungen der Erfindung sind jeweils Gegenstand der Unteransprüche. Eine besonders vorteilhafte Verwendung ist Gegenstand des Patentanspruchs 12.

Erfindungsgemäß weist die Auswerteeinrichtung einen Impulsauslöser auf. Bei einem von der Sensorik erfassten Wechsel des Betriebszustandes des HTS-Strombegrenzers vom supraleitenden in den normalleitenden Betriebszustand kann durch den Impulsauslöser ein Strom- und Spannungsimpuls erzeugt werden. Dieser Impuls kann als Auslösesignal an einen Auslöser des Schaltgerätes übertragen werden und eine Abschaltung des Schaltgerätes bewirken. Unter einem Impulsauslöser wird im Rahmen der Erfindung eine Einrichtung verstanden, bei der durch ein definiertes Eingangssignal (z.B. einer definierten Höhe, Frequenz oder Anstieg über der Zeit des Eingangssignals) ausgangsseitig ein Strom- und Spannungsimpuls erzeugt werden kann.

Bei entsprechender Bemessung des Impulses (Impulshöhe und - dauer) ist eine direkte Ansteuerung des Auslösers des Schaltgerätes möglich. Eine Verstärkung des Auslösesignales, z.B. über zwischengeschaltete Relais, ist somit nicht notwendig. Hierdurch können Zeitverluste in der Auslösung vermieden und eine schnelle Auslösung des Schaltgerätes sichergestellt werden.

Durch entsprechende Dimensionierung des Impulsauslösers und des von diesem erzeugten Impulses ist auch eine Auslösung von Schaltgeräten möglich, die zur Auslösung zusätzlich zu einem schnellen Stromanstieg auch eine spannungsseitige Übererregung benötigen. Dies kann z.B. bei Schaltgeräten mit Auslösekombinationen bestehend aus Spannungsauslöser und Verriegelungsmagneten der Fall sein. Der durch den Impulsauslöser erzeugte Impuls kann durch die Magnete solcher Auslöser getrieben werden und eine Auslösung dieser Schaltgeräte bewirken.

Weisen existierende DC- und AC-Netze als Schaltgeräte Leistungsschalter mit Auslösekombinationen - bestehend aus Spannungsauslöser und Verriegelungsmagneten - auf, kann der durch den Impulsauslöser erzeugte Impuls durch die Magnete solcher Auslöser getrieben werden und eine Auslösung der Leistungsschalter bewirken. Die erfindungsgemäße Vorrichtung kann somit aufwandsarm und platzsparend, letzteres ist insbesondere auf Unterwasserschiffen von großer Bedeutung, sowie kostengünstig unter Benutzung der bereits installierten Leistungsschalter in solchen Netzen nachgerüstet werden.

Der Impuls kann gleichzeitig in mehrere parallel geschaltete Ansteuerkreise für Auslöser unterschiedlicher Schaltgeräte gespeist werden und bei entsprechender Bemessung des Impulses eine schnelle und nahezu gleichzeitige Auslösung mehrerer Schaltgeräte bewirken.

Bevorzugt ist der Impulsauslöser als Kondensatorauslöser ausgebildet und dadurch mit geringem Schaltungs- und Bauteilaufwand realisierbar. Unter einem Kondensatorauslöser wird hierbei eine Einrichtung mit einem Kondensator und einem in Reihe dazu geschalteten Schaltelement verstanden. In dem Kondensator ist eine elektrische Ladung speicherbar, die bei Schließen des Schaltelements in Form eines Strom- und Spannungsimpulses freisetzbar ist. Das Schließen des Schaltelements erfolgt bei Auftreten eines definierten Signals an einem Eingang des Kondensatorauslösers. Als Schaltelement können bekannte elektronische Bauelemente wie z.B. Thyristoren verwendet werden. Die impulsartige Entladung des Kondensators erfolgt dann, wenn der Thyristor gezündet wird und den Kondensatorstromkreis schließt. Das Schaltelement, im Fall des Thyristors das Gate, kann z.B. direkt von der Sensorik angesteuert werden. Zur Ladung des Kondensators kann ein an dem Kondensator angeschlossener Ladekreis vorgesehen werden. Ein großer Vorteil des Kondensatorauslösers ist, dass auch bei Ausfall des Ladekreises die Auslöseenergie für längere Zeit im Kondensator gespeichert bleibt. Die Ausfallsicherheit der Vorrichtung wird damit weiter erhöht.

Wenn die Sensorik den Betriebszustand des HTS-Strombegrenzers anhand der an dem HTS-Strombegrenzer anliegenden Spannung erfasst, ist eine besonders schnelle und zeitnahe Erfassung einer Änderung des Betriebszustandes des HTS-Strombegrenzers von supraleitend auf normalleitend möglich. Die Änderung dieses Betriebszustandes kann von der Auswerteeinrichtung erfasst und mittels des Impulsauslösers eine schnelle Auslösung eines oder mehrerer Schaltgeräte bewirkt werden.

Die Störfestigkeit der Vorrichtung kann dadurch vergrößert werden, dass zwischen die Sensorik und den Impulsauslöser ein Dämpfungsglied, z. B. ausgeführt als RC-Kombination, geschaltet ist. Mit Hilfe dieser Dämpfungsliedes können z.B. transiente Spannungsspitzen aus dem Ausgangssignal der Sensorik gefiltert werden und somit eventuelle Fehlauslösungen der Vorrichtung durch nicht durch den Strombegrenzer verursachte Betriebszustände vermieden werden.

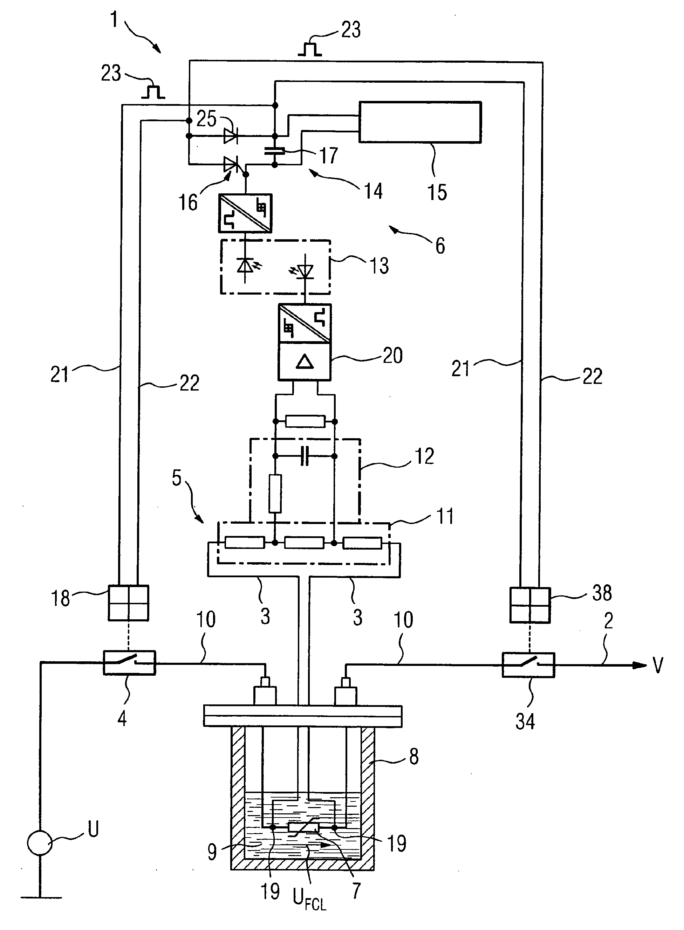

Die Erfindung, sowie weitere vorteilhafte Ausgestaltungen der Erfindung gemäß Merkmalen der Unteransprüche werden im Folgenden anhand eines Ausführungsbeispieles in der Figur näher erläutert.

Die in der Figur gezeigte Vorrichtung 1 zur Schnellabschaltung von Kurzschlüssen weist einen in einen Stromkreis 2 eines AC- oder DC-Netzes geschalteten Hochtemperatur-Supraleiter(HTS)-Strombegrenzer 7 sowie einen ersten Leistungsschalter 4 und einen zweiten Leistungsschalter 34 auf, die zu dem HTS-Strombegrenzer 7 elektrisch in Reihe in den Stromkreis 2 geschaltet sind. Der Leistungsschalter 4 ist elektrisch zwischen eine Spannungsquelle U und den HTS-Strombegrenzer 7 und der Leistungsschalter 38 zwischen den HTS-Strombegrenzer 7 und nachfolgenden Verbrauchern V geschaltet.

Eine Sensorik 5 dient zur Erfassung des Betriebszustandes des HTS-Strombegrenzers 7 und eine an die Sensorik 5 angeschlossene Auswerteeinrichtung 6 zur Erzeugung eines Auslösesignales für den Auslöser 18 des Leistungsschalters 4 und den Auslöser 38 des Leistungsschalters 34. Die Auswerteeinrichtung 6 weist einen als Kondensatorauslöser ausgebildeten Impulsauslöser 14 auf.

Im Fall von Über- oder Unterwasserschiffen handelt es sich bei den Auslösern 18 und 38 bevorzugt um Auslösekombinationen bestehend aus Spannungsauslöser und Verriegelungsmagneten.

Der supraleitende Strombegrenzer 7 besteht z. B. aus einem in einem Kryostat 8 angeordneten und von einem flüssigen Kühlmedium 9 gekühlten Hochtemperatur-Supraleiter einer YBaCuO-Verbindung und hat im supraleitenden Zustand nahezu keinen messbaren Widerstand. Die supraleitende Verbindung kann zusätzlich geshuntet sein, d. h., mit einem Layer aus z. B. Gold, Silber, Platin, abgedeckt sein. Im normalleitendem Zustand ist die keramische Vebindung z. B. vom Typ YBaCuO sehr hochhohmig. Mit Hilfe des Shuntes kann der Widerstand im normalleitendem Zustand des Strombegrenzers herabgesetzt werden. Die Dicke des Shuntes bestimmt dann den Widerstand der Bahn des Strombegrenzers.

Bevorzugt erfasst die Sensorik 5 den Betriebszustand des HTS-Strombegrenzers 7 anhand der an dem HTS-Strombegrenzer 7 anliegenden Spannung U_{FCL}. Wenn der Strombegrenzer 7 aufgrund eines Kurzschlussstromes vom supraleitenden in den normalleitenden Zustand fällt, baut sich sprungartig ein ohmscher Widerstand an dem Strombegrenzer auf, was sowohl an der supraleitenden Verbindung, bei Vorhandensein eines Shunts auch an dem Shunt, einen Spannungsabfall bewirkt. Dieser Spannungsabfall steigt sprungartig innerhalb <1ms an. Diese Spannung kann auf verschiedene Art ausgewertet werden: entweder als ein Spannungsanstieg du/dt oder als ein Schwellwert.

Vorteilhafterweise erzeugt die Sensorik 5 für die Auswerteeinrichtung 6 eine von dem Betriebszustand des HTS-Strombegrenzers 7 abhängige Ausgangsspannung. Dies ist mit geringem schaltungstechnischem Aufwand dadurch möglich, dass die Sensorik 5 einen eingangsseitig parallel zu dem HTS-Strombegrenzer 7 geschalteten Spannungsteiler 11 aufweist. Die an dem Strombegrenzer 7 anfallende und den Betriebszustand des Strombegrenzers charakterisierende Spannung U_{FCL} kann somit entsprechend des Teilungsverhältnisses des Spannungsteilers 11 ohne Verzögerung direkt an die Auswerteeinrichtung 6 weitergegeben werden.

Die an dem Strombegrenzer 7 anliegende Spannung U_{FCL} kann z.B. mittels der Messleitungen 3 auf einfache Weise entweder an den außerhalb des Kryostaten 8 angeordneten Stromzuführungen 10 des Strombegrenzers 7 oder innerhalb des Kryostaten 8 unmittelbar an dem HTS-Material des Strombegrenzers, z.B. an den Punkten 19, abgegriffen werden.

Zur Dämpfung transienter Spannungsspitzen ist zwischen die Sensorik 5 und des Impulsauslöser (Kondensatorauslöser) 14 eine RC-Kombination 12 geschaltet. Es kann somit ein Ansprechen des Impulsauslöser (Kondensatorauslöser) 14 auf ∫U_{FCL}dt (z.B. 0.1 Vs) anstatt auf transiente Spannungsspitzen sichergestellt und somit eventuelle Fehlauslösungen durch nicht durch den Strombegrenzer verursachte Betriebszustände vermieden werden.

Eine galvanische Trennung zwischen der Ansteuerung der Auslöser 18 bzw. 38 der Leistungsschalter 4 bzw. 34 und dem Stromkreis 2 kann dadurch ermöglicht werden, dass der Impulsauslöser (Kondensatorauslöser) 14 über eine optische Trennstrecke 13 mit der Sensorik 5 gekoppelt ist.

Vorteilhafterweise ist der Impulsauslöser (Kondensatorauslösers) 14 über einen Transimpedanzverstärker 20 mit der Sensorik 5 gekoppelt. Durch den Transimpedanzverstärker 20 wird sichergestellt, dass die Auslösung des Impulsauslösers (Kondensatorauslöser) 14 und somit Abschaltung eines Kurzschlusses unabhängig von der Stromrichtung des Kurzschluss-Stromes durch den HTS-Strombegrenzer 7 erfolgt. Dies ist insbesondere in Stromkreisen mit betriebsbedingt wechselnden Stromrichtungen von Bedeutung. Solche wechselnden Stromrichtungen liegen z.B. in DC-Fahranlagen von Schiffen vor, bei denen in Abhängigkeit von der jeweiligen Fahrschaltung oder im Ladebetrieb von Batterien der Strom in der einen oder der anderen Richtung durch den HTS-Strombegrenzer 7 fliessen kann.

Der als Kondensatorauslöser ausgebildete Impulsauslöser 14 besteht aus einem Kondensator 17, einem mit dem Kondensator 17 verbundenen Kondensatorladekreis 15, einem in Reihe zu dem Kondensator 17 geschalteten Thyristor 16 und einer parallel zu dem Kondensator 17 und dem Thyristor 16 geschalteten Diode 25. Parallel zu der Diode 25 sind Verbindungsleitungen 21 und 22 von Stromkreisen zur Ansteuerung der Auslöser 4 und 34 geschaltet.

Im supraleitenden Zustand des HTS-Strombegrenzers 7, d.h. ohne Vorliegen eines Kurzschlusses in dem Stromkreis 2, ist der Kondensator 17 durch den Kondensatorladekreis 15 aufgeladen. Da an dem Strombegrenzer 7 keine Spannung U_{FCL} abfällt, liegt auch keine Spannung am Gate des Thyristors 16, der Thyristor 16 sperrt den Kondensatorstromkreis und verhindert somit eine Entladung des Kondensators 17.

Im Fall eines Kurzschluss-Stromes im Stromkreis 2 geht der HTS-Strombegrenzer 7 vom supraleitenden in den normalleitenden Zustand, d.h. es kommt zu einem Ansprechen des HTS-Strombegrenzers 7 und einer Änderung seines Betriebszustandes. Aufgrund des sich erhöhenden Widerstandes beim Übergang in den normalleitenen Zustand steigt die Spannung U_{FCL} am HTS-Strombegrenzer 7. Entsprechend des Teilungsverhältnisses des Spannungsteilers 11 liegt augenblicklich eine entsprechende Spannung an dem Transimpedanzverstärker 20 an. Über den Transimpedanzverstärker 20 und die optische Trennstrecke 13 wird das Spannungssignal an das Gate des Thyristors 16 weitergegeben. Bei Überschreiten einer definierten Schwellspannung am Gate (der "Zündspannung" des Gate) zündet der Thyristor 16 und der Kondensator 17 wird impulsartig entladen.

Durch den Kondensator 17 wird somit jeweils ein Strom- und Spannungsimpuls 23 auf die Verbindungsleitungen 21 und 22 der Auslöser 8 und 38 gegeben. Der über die Magnete der Auslöser 8 und 38 getriebende Stromimpuls führt innerhalb kurzer Zeit zu einem nahezu gleichzeitigen Auslösen der Leistungsschalter 3 und 34, einer Unterbrechung des Stromkreises 2 und somit einer Abschaltung des Kurzschlussstromes.

Generell kann bei entsprechender Dimensionierung des Kondensators 17 über nicht weiter dargestellte Verbindungsleitungen Strom über die Magnete von Auslösern weiterer Leistungsschalter getrieben werden und somit eine nahezu gleichzeitige Abschaltung einer Vielzahl von Leistungsschaltern innerhalb kurzer Zeit bewirkt werden.

Nach Abschaltung des Kurzschlusses steht an dem HTS-Strombegrenzer 7 keine Spannung mehr an. Entsprechend liegt auch keine Spannung mehr am Gate des Thyristors 16 an, so dass der Strompfad des Kondensators 17 wieder unterbrochen ist und der Kondensator 17 durch den Ladekreis 15 wieder aufgeladen werden kann. Nach erfolgter Ladung des Kondensators 17 und einer kurzen Rückkühlung des HTS-Strombegrenzers 7 ist die Vorrichtung 1 wieder betriebsbereit und die Leistungsschalter 4 und 34 können - nach Beseitigung des Kurzschlussgrundes- wieder geschlossen werden.

Aufgrund der beschriebenen Vorteile eignet sich die Vorrichtung 1 insbesondere zur Verwendung in elektrischen DC- und AC-Netzen von Über- und Unterwasserschiffen und Offshoreanlagen.

## Patentansprüche

1. Vorrichtung (1) zur Schnellabschaltung von Kurzschlüssen in elektrischen DC- und AC-Netzen, mit
- einem von dem Kurzschlusstrom durchflossenen Hochtemperatur-Supraleiter(HTS)-Strombegrenzer (7),
- einem elektrisch in Reihe dazu angeordnetem Schaltgerät (4),
- einer Sensorik (5) zur Erfassung des Betriebszustandes des HTS-Strombegrenzers (7) und
- einer an die Sensorik (5)angeschlossenen Auswerteeinrichtung (6) zur Erzeugung eines Auslösesignales für einen Auslöser (18) des Schaltgerätes (4)
**dadurch gekennzeichnet, dass**
die Auswerteeinrichtung (6) einen Impulsauslöser (14) aufweist.

2. Vorrichtung (1) nach Anspruch 1,
**dadurch gekennzeichnet, dass**
der Impulsauslöser (14) als Kondensatorauslöser ausgebildet ist.

3. Vorrichtung (1) nach einem der vorhergehenden Ansprüche,
**dadurch gekennzeichnet, dass**
die Sensorik (5) den Betriebszustand des HTS-Strombegrenzers (7) anhand der an dem HTS-Strombegrenzer (7) anliegenden Spannung (U_{FCL}) erfasst.

4. Vorrichtung nach einem der vorhergehenden Ansprüche,
**dadurch gekennzeichnet, dass**
die Sensorik (5) eine von dem Betriebszustand des HTS-Strombegrenzers (7) abhängige Ausgangsspannung erzeugt.

5. Vorrichtung (1) nach einem der vorhergehenden Ansprüche,
**dadurch gekennzeichnet, dass**
die Sensorik (5) einen eingangsseitig parallel zu dem HTS-Strombegrenzer (7) geschalteten Spannungsteiler (11) aufweist.

6. Vorrichtung (1) nach einem der vorhergehenden Ansprüche,
**dadurch gekennzeichnet,**
**dass** der Impulsauslöser (14) über eine optische Trennstrecke (13) mit der Sensorik (5) gekoppelt ist.

7. Vorrichtung (1) nach einem der vorhergehenden Ansprüche,
**dadurch gekennzeichnet,**
**dass** der Impulsauslöser (14) über einen Transimpedanzverstärker 20 mit der Sensorik 5 gekoppelt ist.

8. Vorrichtung (1) nach einem der vorhergehenden Ansprüche,
**dadurch gekennzeichnet,**
**dass** ein Dämpfungsmittel (12) zwischen die Sensorik (5) und den Impulsauslöser (14) geschaltet ist.

9. Vorrichtung (1)nach Anspruch 3,
**dadurch gekennzeichnet,**
**dass** die Sensorik (5) die an dem HTS-Strombegrenzer (7) anliegende Spannung (U_{FCL}) an Stromzuführungen (10) des HTS-Strombegrenzers (7) abgreift, die außerhalb eines den HTS-Strombegrenzer (7) aufnehmenden und kühlenden Kryostaten (8) angeordnet sind.

10. Vorrichtung (1) nach Anspruch 3,
**dadurch gekennzeichnet,**
**dass** die Sensorik (5) die an dem HTS-Strombegrenzer (7) anliegende Spannung (U_{FCL}) innerhalb eines den HTS-Strombegrenzer (7) aufnehmenden und kühlenden Kryostaten (8) unmittelbar an dem HTS-Material des HTS-Strombegrenzers (7) abgreift.

11. Vorrichtung (1) nach einem der vorhergehenden Ansprüche,
**dadurch gekennzeichnet, dass**
als Schaltgerät (4) ein Leistungsschalter mit einem Auslöser (18) vorgesehen ist, der eine Auslösekombination mit einem Spannungsauslöser und Verriegelungsmagneten aufweist.

12. Verwendung der Vorrichtung nach einem der vorhergehenden Ansprüche in elektrischen DC- und AC-Netzen von Über- und Unterwasserschiffen und Offshoreanlagen.
